Europäisches Patentamt

European Patent Office

Office européen des brevets

(11) Publication number: **0 171 998**
**B1**

# (12) EUROPEAN PATENT SPECIFICATION

(45) Date of publication of patent specification: **01.02.89**

(21) Application number: **85305630.7**

(22) Date of filing: **08.08.85**

(51) Int. Cl.⁴: **F 16 K 31/06,** F 15 B 9/03, F 42 B 19/06

(54) **Servo apparatus.**

(30) Priority: **15.08.84 US 641104**
**15.08.84 US 641113**

(43) Date of publication of application:
**19.02.86 Bulletin 86/08**

(45) Publication of the grant of the patent:
**01.02.89 Bulletin 89/05**

(84) Designated Contracting States:
**DE FR GB IT SE**

(56) References cited:
**FR-A-2 276 522**
**FR-A-2 420 066**
**FR-A-2 550 870**
**US-A-2 505 981**
**US-A-3 561 326**
**US-A-3 661 183**
**US-A-3 880 476**
**US-A-3 943 968**
**US-A-3 967 648**
**US-A-3 995 800**
**US-A-4 063 568**
**US-A-4 151 856**
**US-A-4 327 772**

(73) Proprietor: **ALLIED-SIGNAL INC.**
**Columbia Road and Park Avenue P.O. Box 2245R**
**Morristown New Jersey 07960 (US)**

(72) Inventor: **Abel, Stephen G.**
**650 West 6 Drive**
**Mesa Arizona (US)**
Inventor: **Green, Brad C.**
**2044 West Nopal Drive**
**Mesa Arizona (US)**
Inventor: **Dobson, William.**
**11422 North 68 Street**
**Scottsdale Arizona (US)**

(74) Representative: **Arthur, George Fitzgerald et al**
**KILBURN & STRODE 30, John Street**
**London WC1N 2DD (GB)**

Courier Press, Leamington Spa, England.

## Description

The present invention relates to servo apparatus and methods, for example, for controlling the course of a torpedo or airborne missile. In such an application the servo apparatus has generally an actuator for moving a fin, rudder, or other control surface in response to a control signal.

The servo apparatus may use valve apparatus to control flow of pressurised compressible or incompressible fluid from a source to a first receiver in the form of a fluid motor and from the first receiver to a lower pressure second receiver e.g. a sump in response to a control signal.

Input or control signals may be electrical voltage or current signals originating with a vehicle autopilot acting as a transducer, which may take the form of a solenoid coil, or of a Galvanometer movement coupled to the valve apparatus via force amplifying structure.

A conventional servo valve is known in accordance with United States Patent 4,151,856 granted 1 May 1979 to B.S. Burrus, wherein an input member provides an input signal by moving an input portion of the servo valve to a selected position. The input portion of the servo valve cooperates with a plug member and a movable wall to define a two-way pilot valve. Communication of pressure fluid is controlled by the pilot valve to and from a force amplifying diaphram actuating a second or booster two-way valve.

With that servo valve the input signal must overcome substantially unbalanced forces originating both with fluid pressures and with resilient members within the valve before the pilot valve is moved from a closed to an open position to effect an increase or decrease of output pressure. Consequently, the servo valve of Burrus has an inherent force dead band wherein forces exerted by the input member to not effect an output pressure change. The input member forces must exceed the force dead band before an output pressure change can be effected.

Further, with respect to the servo valve of Burrus, the gain of the valve, that is, the ratio of output pressure change to input signal change, is believed to be substantially constant regardless of the frequency or rate of input signal changes applied to the servo valve. Such a substantially constant servo valve gain within a broad frequency band width may present no serious or unacceptable detriment in a relatively low fidelity servo system. In such a servo system, the output response of the system may permissively deviate from that commanded by the input signal, particularly during transient response of the system.

On the other hand, because a narrow band width servo system of relatively high fidelity needs to respond to input signals only within a relatively narrow range of frequency, the servo system can be designed to be stable and provide a response of high fidelity within the permisible frequency band for the input signal. However, when a conventional servo valve, like that of Burrus, is employed in a servo system required to provide high fidelity over a broad frequency band width, or rate of input signal change, many deficiencies become apparent.

Servo valves are not new in themselves, e.g. Belart's U.S. patent no. 3880476 discloses an electromagnetically operated valve for controlling distribution of pressure fluid between different inlets and outlets. McLeod's U.S. Patent no. 2505981 discloses a pneumatic control system for an outlet member in which pivoting of a lever is controlled by the pressures in two opposing pairs of bellows by operation of a pair of valve members in one of the bellows.

However, the present invention was developed to provide a much more highly responsive valve control system, e.g. for controlling a control surface of an aircraft.

By way of example only, the mission requirements of a very high-speed dirigible automotive vehicle, such as an air-to-air missile, well illustrate a very challenging problem to a servo system. On one hand, missile launching and terminal phases of the mission require large, high-powered, frequent excursions of the missile aerodynamic control surfaces. These large excursions will be made in response to correlative input signals, and must be well damped and executed with stability and without overshoot. Such large excursions of the control surfaces are necessary to achieve launching of the missile while avoiding collision with the parent aircraft, and to successfully follow an evasive target.

On the other hand, cruising phases of the missile mission require only comparatively small and infrequent control surface movements for course correction. However, these small course-corrective movements must in fact be made by the servo system in response to small input signals. That is, if the small input signals are lost to servo system dead band or hysteresis, a course correction will be effected only after the course error has reached a higher level. The missile will then undesirably follow a wandering course.

In view of the above, it will be appreciated that each phase of operation of a high-speed dirigible automotive vehicle, of whatever type, requires differing characteristics of the control servo system. Launch and terminal mission phases require a low-gain, high powered servo system which is stable at high frequencies. Missile cruise, on the other hand, requires a high-gain, sensitive and responsive servo system which will effect small input signals.

Conventional servo apparatus cannot satisfactorily fulfill the full range of requirements set out above, because they generally have a substantially flat gain curve as a function of input frequency.

Aspects of the present invention are:-

Servo valve method and apparatus wherein imbalanced pressure forces within the valve apparatus are substantially eliminated within a selected input signal frequency band width;

a servo valve method and apparatus where the input force dead band of the valve apparatus is substantially eliminated within a selected input frequency band width;

a servo valve method and apparatus having an increased gain of output fluid pressure as a function of input signal magnitude within a selected band width of input frequency;

a servo valve apparatus displaying a gain decreasing with input frequency above a selected input frequency band width to reach a lesser substantially constant gain at a determined input frequency and thereabove;

a servo system having a gain variable in response to input signal frequency.

According to an aspect of the invention in servo valve apparatus and method an input member is selectively movable by an input force transducer to move first and second valve elements respectively controlling the supply and venting of pressure fluid from a source to and from a receiver; force balancing structure substantially counter balances pressure forces within the valve apparatus to effect high gain operation thereof substantially without an input force dead band. The force balancing structure may include means for selectively inhibiting the operation thereof with increasing input signal frequency.

According to another aspect of the invention servo valve apparatus comprises one or more of the following features:-

A housing defining inlet, outlet, and vent ports with a flow path communicating all of the parts with one another;

a first valve member movably received in the flow path and co-operating with the housing in a first position to close fluid communication from the inlet port to the outlet port;

the first valve member defining a passage communicating the outlet port with the vent;

a second valve member movably received in the flow path and co-operating with the first valve member in a first relative position thereof to close communication between the outlet port and the vent;

the second valve member being movable subject to an input signal to move in the first relative position while moving the first valve member to a second position communicating the inlet port with the outlet port;

the second valve member being movable subject to an input signal to move from the first relative position to a second relative position communicating the outlet port with the vent;

the valve apparatus defining a feedback area which is subject to fluid pressure within a feedback fluid volume;

the feedback fluid volume being restrictively communicated with the outlet port; whereby the fluid pressure within the feedback fluid volume follows fluid pressure at the outlet port approximately as a first time derivative thereof;

force is transmitted from the feedback area to the second valve member to counterbalance pressure forces on the the first and second valve members, so that when the fluid pressure at the outlet port is changing slowly and the pressure of the feedback fluid volume approximates outlet port pressure, the valve apparatus is substantially pressure balanced, has substantially no force dead band, and displays a comparatively high gain, whereas with rapid change of fluid pressure at the outlet port the pressure of the feedback fluid volume lags so that pressure balancing and gain of the valve apparatus are lessened.

The present invention also comprehends a servo system wherein an output member is selectively movable by a fluid pressure responsive motor in response to a flow of pressure fluid from a source thereof via a servo valve subject to input signals. The servo valve may include means providing a variable negative feedback of force opposing the input signals. The feedback force may be analogous to a first time derivative of fluid pressure supplied by the servo valve to the motor. Consequently, the servo system exhibits a gain of output member movement compared to input signal magnitude which is variable and lessens with increasing frequency of input signal changes. Moreover, because acceleration of the output member is a function of the force applied thereto by the fluid pressure responsive motor, and is proportional to the rate of change in fluid pressure supplied thereto by the servo valve, the feedback effective within the servo valve represents a negative feedback within the servo system which is analogous to the second time derivative, or acceleration, of the output member. Such feedback is advantageous in achieving a stable high fidelity servo system.

Further, the present invention comprehends a method of operating a servo system wherein negative feedback is provided to a control valve to resist an input signal, the negative feedback being a function of output fluid pressure and analogous to a function of acceleration of an output member. The negative feedback force may be a function of the fluid pressure downstream of a valve member.

The present invention also provides a novel method of making servo valve apparatus of the two-way, closed centre type having a pair of valve members each defining a respective sealing area and being, therefore, pressure responsive to pressure fluid applied thereto. Such a novel method comprises operatively associating a first elongate valve member with an annular seat member therefor to define one sealing area, the first valve member being co-operable with a second valve member to define the other of the pair of sealing areas, and plastically deforming the first valve member to both match the other sealing area with the one sealing area and to captively retain the seat member on the first valve member.

In general the servo apparatus may use a low power input transducer because the valve member is substantially pressure balanced at relatively low input frequencies. Further, the valve apparatus while displaying a relatively high gain at low input frequencies, has a diminishing gain with increasing input frequency so that the stability of a servo system including the servo valve is enhanced at higher operating frequencies of input signal. Also, infrequent input signals of low magnitude are not swamped out or lost to servo system inertia, dead band, or hysteresis, and are in fact effected by the servo system. Additionally, a negative feedback loop analogous to acceleration of the output member enhances stability of the servo system at high input frequencies and avoids overshoot.

In general the servo apparatus or servo valve will have means for driving the valve member in response to an input signal and that may take various forms. For example, an electromagnetic drive could be used from the input signal by way of an amplifier or a fluid pressure drive could be used and that could be in response to the output of a fluid amplifier having electrical means for controlling it in response to the input signal. Another suitable drive for the input member of the valve would be a galvanometer movement.

While the input signal representing a demanded valve movement could for example be an electrical analogue signal, one convenient form of the signal is a constant frequency square wave whose mark/space ratio or duty cycle can vary between 0 and 100% in accordance with the input signal.

The valve member or the input member for driving it could conveniently be mounted on an annular resilient guide which could be adjusted to set the valve member in the absence of an input signal to a centered position in which the valve port or ports are just closed.

An aspect of the invention is the use of the servo valve or servo apparatus for moving a control member and provided with two feedback paths namely a first path for providing negative feedback on the valve member approximately related to the rate of change of pressure of output fluid for driving a motor for positioning the control member, and a direct feedback of a signal representing the position of the control member for comparison with a signal representing a desired position so that an error signal dependent on any difference between the two can be used as an input signal to the valve member.

The invention may be carried into practice in various ways and certain embodiments will now be described by way of example with reference to the accompanying drawings, in which:-

Figure 1 schematically depicts a servo system according to the invention;

Figure 2 is an enlarged schematic view of the servo valve in the apparatus illustrated also in Figure 1;

Figure 3 is another schematic illustration of the servo valve;

Figure 4 shows the characteristic of the output of the servo valve apparatus of Figures 1 to 3 against the rate of change of its input signal;

Figures 5 to 8 are cross-sectional elevations of variants of the servo valve apparatus, the embodiment of Figure 8 being particularly adapted for use with incompressible fluid;

Figure 9 is a cross-sectional view of one practical embodiment of the servo-valve apparatus; and

By way of example only, the invention is described as applied to a positioner servo system for an aerodynamic control surface of an airborne vehicle, such as an automotive missile.

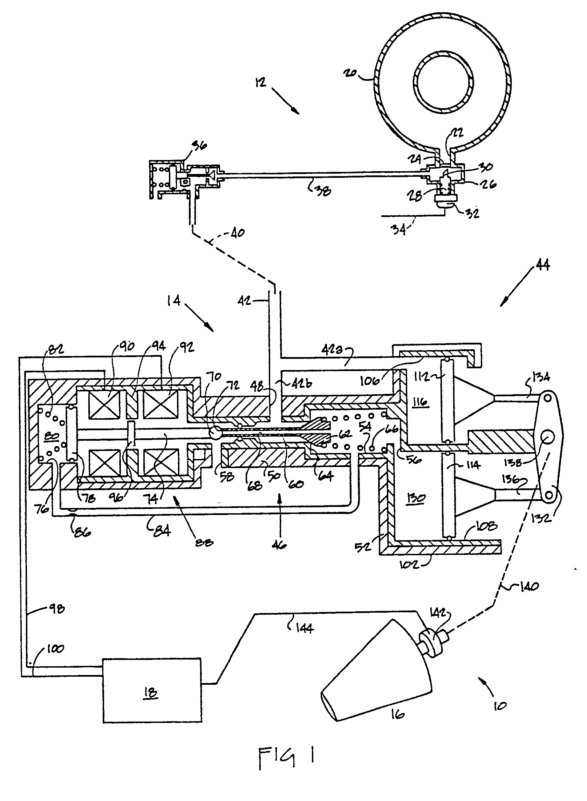

Figure 1 schematically depicts a preferred embodiment of the present inventive servo system apparatus 10. The apparatus 10 is depicted as a missile fin actuator. In overview, the servo system apparatus 10 includes a fluid pressure source, generally referenced with the numeral 12; a combined control signal transducer, servo valve apparatus, and fluid pressure motor unit 14; a vehicle control portion 16, which is pivotally driven by the motor portion of unit 14 and takes the form of an aerodynamic missile fin; and a control signal originator 18.

With greater particularity, the fluid pressure source 12 conventionally includes a toroidal pressure vessel 20 which holds pressurized gaseous fluid. By way of example, the vessel 20 preferably contains gaseous Helium at a storage pressure of from about 564 kg/cm² 8000 PSIG) to as much as 846 kg.cm² (12,000 PSIG). The vessel 20 defines an outlet port 22 wherein is disposed a frangible closure diaphragm 24. An electroinitiator 26 is secured to the pressure vessel at port 22. The electroinitiator includes a movable plunger 28 which carries a diaphragm penetrator portion 30. The plunger 28 is movable to pierce diaphragm 24 with penetrator 30 upon detonation of a small explosive charge which is disposed in portion 32 of the electroinitiator. Detonation of the explosive charge within portion 32 may be effected electrically via a conductor 34.

Further to the above, the fluid pressure source 12 also includes a pressure regulator 36 which communicates with the pressure vessel 20 downstream of diaphram 24 via a conduit 38. The pressure regulator 36 is of conventional construction and operation. Regulator 36 receives high pressure fluid from vessel 20 and reduces the pressure thereof to a lower regulated pressure for utilization in the remainder of servo system 10. Preferably, regulator 36 provides a controlled fluid pressure of about 70.5 kg/cm² (1000 PSIG) to unit 14 via a conduit 40.

The conduit 40 connects with a branched manifold 42 at unit 14. One of the branches 42a of manifold 42 connects directly with the fluid pressure motor portion of unit 14; which is generally referenced with the numeral 44 and which is described in greater detail below. However, a second branch 42b of manifold 42 communicates with a servo valve portion 46 of unit 14 at an inlet port 48. The servo valve portion 46 includes a central portion 50 of a housing 52 of the unit 14. Housing portion 50 defines an elongate stepped bore 54. The bore 54 connects inlet port 48 with an outlet port 56 and a vent port 58. A first valve member 60 is movably received in the bore 54. valve member 60 includes a head portion 62 which is sealingly cooperable with housing 52 at a step 64 of bore 54 to close fluid communication between the inlet port 48 and outlet port 56. A coil spring 66 extends between the housing 52 and head portion 62 to resiliently bias the valve member 60 into engagement with step 64. Valve member 60 also defines a through passage 68 communicating outlet port 56 with vent port 58. A second valve member 70 is movably received in bore 54 adjacent the end of valve member 60 remote from head portion 62. Valve member 70 is sealingly cooperable with the valve member 60 at a seat 72 defined on the latter and circumscribing an opening of passage 68.

Also movably received within bore 54 is an elongate input member 74. The input member 74 is cooperable with valve member 70 to resiliently urge the latter into sealing engagement with valve member 60 at seat 72. In order to complete this preliminary description of the servo system apparatus 10 and servo valve apparatus 46, it must be noted that a portion 76 of bore 54 movably and sealingly receives a piston member 78. The piston member 78 cooperates with housing 50 to define a chamber 80. A coil spring 82 biases piston member 78 rightwardly into engagement with an end of input member 74. Thus, the coil spring 82 also biases the input member 74 rightwardly to urge valve member 70 into engagement with valve member 60. A conduit 84 communicates the chamber 80 with outlet port 56. Conduit 84 defines a restrictive orifice at 86.

The unit 14 also includes an input signal transducer portion which is generally referenced with the numeral 88. Portion 88 preferably includes a pair of solenoid coil windings 90, 92 which are disposed on opposite sides of an annular pole piece 94. The input member 74 defines an armature collar 96 which is radially aligned with pole piece 94. Consequently, the armature collar 96 and input member 74 are movable both leftwardly and rightwardly from the position illustrated in response to individual energization of solenoid coils 90, 92 respectively. A pair of electrical conductors 98, 100 extend from solenoid coils 90, 92 respectively, to connect the latter with control signal originator 18.

A fluid pressure responsive motor portion which is generally referenced with the numeral 102 is also included in unit 14. The housing 50 defines two parallel bores 106, 108 of differing and successively larger diameters, and which receive respective piston members 112, 114. The bore 106 and respective piston member 112 sealingly cooperate with each other to define a chamber 116. Manifold branch 42a communicates with chamber 116. Similarly, piston member 114 cooperates with housing 50 to define a chamber 130 within bore 108. The outlet port 56 opens to chamber 130. Piston members 112, 114 are connected to opposite ends of a lever 132 via respective rods 134, 136. The lever 132 is drivingly connected to a shaft 138 which is journaled by housing 50. Lever 132 is drivingly connected to fin 16 via a connection illustrated by dashed line referenced with numeral 140.

At this juncture, it is easily seen that opposing reciprocating motion of pistons 112, 114 will cause pivotal motion of fin 16 via rods 134, 136, lever 132, shaft 138, and connection 140. A position feedback channel for the servo system apparatus 10 is defined by a pivotal position transducer 142 operatively associated with the fin 16, and by a loop closing conductor 144 between transducer 142 and control signal originator 18. Consequently, the servo system apparatus 10 may be used to pivotally position fin 16 in response to a guidance signal supplied to control signal originator 18.

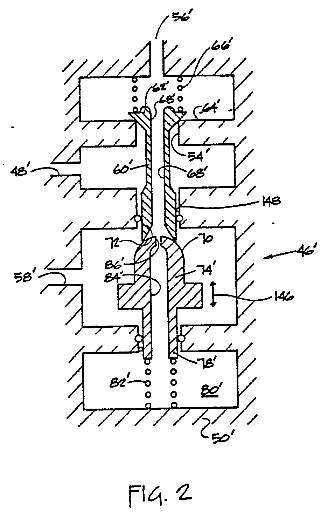

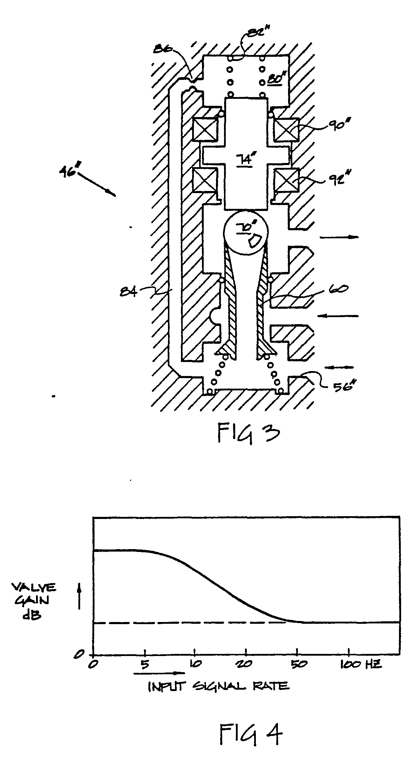

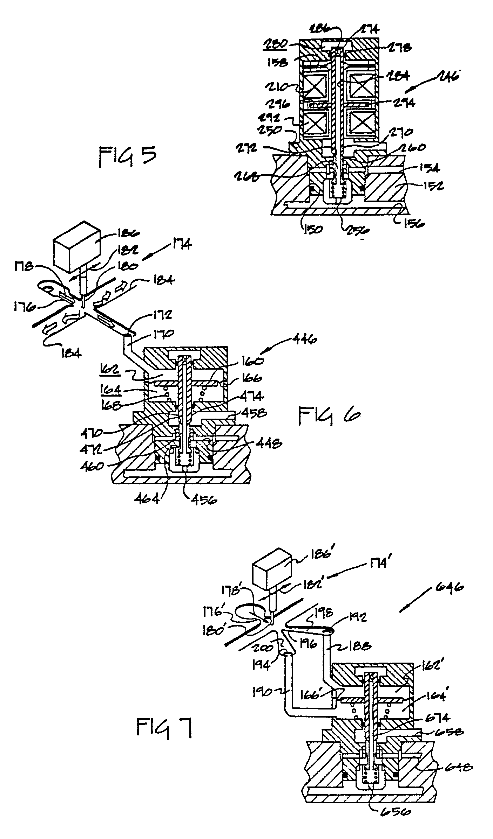

Before considering in greater detail the operation and functional dynamics of the servo system apparatus 10, it is well to consider alone the functioning and principle of operation of the servo valve apparatus 46. In this way, the dynamics of the servo valve apparatus may be more easily understood, and the ramifications of these valve dynamics in the overall servo system 10 may be more fully appreciated. To this end, Figure 2 depicts a schematic of the servo valve apparatus 46, wherein reference numerals previously used and with a prime added designate similar or functionally equivalent features.

Viewing Figure 2, it will be seen that for simplicity, the second valve member 70, input member 74, piston member 78, conduit 84 and orifice 86 have been combined into a single structural element, which is referred to as input member 74' in the following discussion of Figure 2. The input member 74' is connected to a control signal force transducer, which is not shown, and which need not be disclosed for a complete understanding of the operative principles of servo valve apparatus depicted by Figure 2. The control signal transducer has as its characteristic the ability to apply a variable force to input member 74' in response to and analogous to the magnitude of a control input signal. The force so exerted may be either upwardly or downwardly directed, viewing Figure 2, and is represented by arrow 146. Force 146 may effect a relatively large movement of member 74', may effect a comparatively small movement of member 74', or may effect no movement at all of member 74', dependent upon the balance of forces effective on member 74'. Finally, it must be noted that the first valve member 60' sealingly and and movingly cooperates with housing 50' at a portion 148 of bore 54. The bore portion 148 is of equal diameter to the piston portion 78' of member 74', and is also equal to the seating diameter of head portion 62' at step 64', and is substantially equal to the seating diameter between first valve member 60' and input member 74'. Also, the preload of spring 66' must slightly exceed that of spring 82'.

In view of the above, it will be observed that the first valve member 60' is pressure balanced with respect to fluid pressure applied to inlet port 48'. That is, regardless of the level of fluid pressure at inlet port 48', such pressure has no effect upon the operation of servo valve apparatus 46'. Further, the first valve member 60' is also pressure balanced with respect to fluid pressure at outlet port 56'. The seating diameter of head portion 62' at step 64' substantially matches the seating diameter of input member 74' at seat 72'. Because fluid pressure at outlet 56' effective on head portion 62' is communicated by passage 68' to seat 72', the valve member 60 is substantially pressure balanced thereby. Also, the input member 74' is statically pressure balanced with respect to fluid pressure at outlet port 56'. That is, fluid pressure communicated via passage 68' to seat 72' and effective on valve portion 70' of member 74' is also communicated via orifice 86' and passage 84' to chamber 80'. Thus, fluid pressure acting downwardly on input member 74' at valve portion 70' is counter balanced by fluid pressure within chamber 80' acting upwardly on piston portion 78' viewing Figure 2.

In further view of the above, it is easily seen that input force 146 need only overcome static friction and the preload of one of the springs 66' and 82' to overcome the static balance or equilibrium of servo valve apparatus 46'. Consequently, the servo valve apparatus 46' displays virtually no static force dead band. An input force applied either upwardly or downwardly to input member 74' will, once it exceeds the respective friction force and spring preload, open communication either from inlet 48' to outlet 56', or from outlet 56' to vent 58'. It follows, that the static gain of the servo valve apparatus 46', the ratio of fluid pressure change effected at outlet 56' in comparison to the magnitude of input force applied to member 74', will be quite high. It should be noted that the forces of the springs 66' and 82' are very small as compared with the fluid pressure forces, which are dominant in the operation.

On the other hand, once the static equilibrium of servo valve apparatus 46' has been upset so that fluid pressure at outlet port 56' is increasing or decreasing with time, the dynamics of the valve apparatus are particularly interesting. For example, if the input force on member 74' is upwardly directed, valve member 60' is unseated at step 64' and pressurized fluid is communicated to outlet port 56'. Dependent upon the volume of fluid receiver connected with outlet port 56', and the differential pressure between the latter and inlet port 48', the fluid pressure at outlet port 56' increases as a variable function of time. Such increased fluid pressure is communicated via passage 68' to valve portion 70' of input member 74' and exerts a downwardly directed force thereon resisting the upwardly directed input force 146. The increasing fluid pressure at outlet port 56' is also communicated via passage 84' and orifice 86' to chamber 80' to exert an upwardly directed balancing force on input member 74'. However, the size of orifice 86' is selected in view of the combined volumes of passage 84' and chamber 80' so that fluid pressure change in the latter is inhibited and can not change as fast as fluid pressure at outlet port 56'. The fluid pressure in chamber 80' follows or lags behind the pressure at outlet port 56' approximately as a first time derivative of the latter. In other words, during dynamic or transient response, the servo valve apparatus 46' is not fully pressure balanced. Consequently, a portion of the input force 146 is expended in resisting dynamically unbalanced pressure forces rather than in unseating valve member 60' from step 64'. It follows, that the dynamic gain of the servo valve apparatus 46' is less than the static gain thereof, and further, that such gain is a function of the dynamic condition and recent history of pressure changes effected by the valve apparatus 46'. The chamber 80' thus serves as a short term integrating memory in the valve apparatus 46'. When the input force is downwardly directed to vent pressure from port 56' to port 58', a similar force imbalance occurs at input member 74' opposing the input force.

A sudden change in the pressure at 56' would produce a gradual change in the pressure at 80', whereas a gradual change at 56' would produce a more gradual change at 80'.

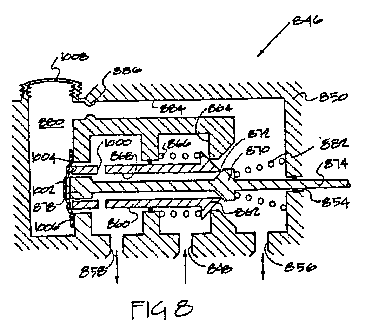

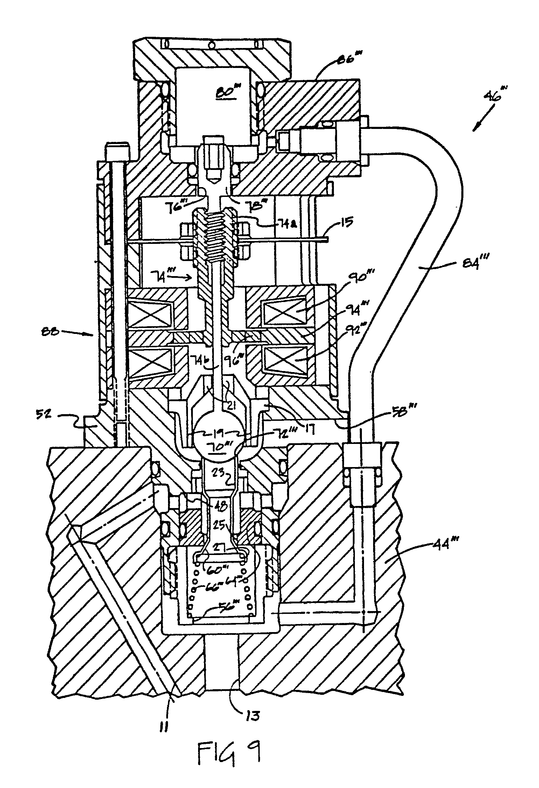

In further explanation of the above, Figures 3 and 4 illustrate an employment of the operative principles explained immediately above, and which are carried into effect by servo valve structure similar to that illustrated in Figure 1. Once again, features which are similar or analogous in function to those described in connection with Figure 1 are referenced with the same numeral used previously and having double prime added. However, an ancillary explanation is required at this juncture for a complete understanding of the following. The operative principles of the servo valve of Figure 2 were described in the context of an analog servo system. That is, an input force was applied to member 74' and the movement thereof and pressure change response at outlet port 56' were analogous to (a function of) the input force. However, modern servo technology increasingly favors binary digital operation. The reasons for this favoritism are beyond the scope of this writing. Moreover, a particularly favored form of binary servo operation is Pulse Duration Modulation (PDM). In such a servo system, input signals are generated as a train of substantially square wave electrical voltage pulses having a constant clock rate and amplitude, and an individually variable duration or duty cycle. The duration of each one of such pulses may vary from zero to the full duration allowed by the particular clock rate of the servo system. consequently, a train of zero duration pulses represents one extreme of the possible input signals while a train of full duration pulses represents the other extreme.

Viewing Figure 3, it is believed that when a PDM input signal is applied to one or the other of solenoid coils 90'', 92'', several phenomena including electrical, magnetic, and inertial cooperate to effect a virtually complete filtering of the PDM signal and an analog output response at outlet port 56". For example, when a PDM signal is applied to solenoid coil 92", with the servo valve apparatus 46" in a condition of static equilibrium, the PDM square wave voltage signals are believed to be partially filtered by the capacitance and inductance of coil 92". Consequently, current within coil 92" will be time variant, but will not display the sharp square wave shape of the PDM voltage signal. Current within coil 92" generates a magnetic field within pole piece 94" and armature 96". A similar partial filtering is believed to be effected by magnetic inertia phenomena so that the magnetic force exerted on input member 74" is further smoothed. Similarly, although the input member 74" is quickly movable, the mass inertia of input member 74" is believed to effect another partial filtering so that the input member 74" may dither, but exerts a time average force which is analogous to the filtered PDM input signal. A further possible filtering may be effected by the fluid volume communicating with outlet port 56" so that fluid pressure thereat is analogous to the filtered PDM input signal despite possible dithering of the valve members 60", 70" in response to dither of input member 74".

Consideration of the above while recalling the description of Figure 2 will make apparent that PDM operation of the servo valve apparatus 46" does not defeat the variable gain function thereof, which function was explained above. Moreover, Figure 4 illustrates the result of mathematical modeling of all the physical functions and phenomena discussed above. Figure 4 illustrates that the gain of servo valve apparatus 46", the ratio of output pressure change effected in comparison to the magnitude of input signal applied, is a function of the rate at which the input signal is changed. The variable gain feature of the servo valve apparatus 46" has been verified by actual reduction of the present invention to practice in a servo system, which also reflected the variable gain of the servo valve apparatus. Figure 4 depicts a valve gain roll off or diminution for the embodiment tested of about 15 db between near-static operation and an input frequency of about 60Hz. Above the 60Hz frequency the servo valve apparatus displayed a nearly constant gain within the frequency range of the test.

Having observed the structure and functioning of the servo valve apparatus alone by consideration of Figures 2—4, the advantages of such valve apparatus in a complete servo system, as depicted by Figure 1, may be appreciated. Returning once again to consideration of Figure 1, when the servo system 10 is to brought into operation, the explosive charge within portion 32 of electroinitiator 26 is detonated by electrical current applied to conductor 34. Thus, plunger 28 is driven upwardly to puncture diaphragm 24 with penetrator 30. Consequently, high pressure gaseous Helium flows via conduit 38 to pressure regulator 36 and is regulated thereby to a controlled pressure of about 70.5 kg/cm² (1000 PSIG). Such regulated pressure fluid flows via conduit 40 to manifold 42, and to chamber 116. That pressure acting on the piston 112 applies a clockwise torque to shaft 138 via rod 134. Such clockwise torque will cause corresponding pivotal movement of fin 16 which is sensed via transducer 142 and communicated to signal originator 18 via conductor 144. Assuming that such clockwise movement of fin 16 is not in accord with the guidance command received by initiator 18, the latter will apply a PDM control signal to solenoid coil 92 via conductor 100 to move input member 74, and valve members 60 and 70 rightwardly. Consequently, head portion 62 of valve member 60 is unseated to admit pressure fluid to chamber 130. The piston 114 has a larger effective area than piston 112 so that a lower fluid pressure in chamber 130 is sufficient to counterbalance the full regulated fluid pressure in chamber 116. Upon the chamber 130 attaining the necessary counterbalancing pressure, and attainment of the commanded fin position as sensed by signal originator 18 via transducer 142, the PDM input signal to solenoid coil 92 is stopped and the servo system attains a state of static equilibrium.

Subsequent to the above, by way of example, a guidance command may be received by signal originator 18 calling for a clockwise pivotal movement of fin 16. Thus, signal originator 18 supplies a PDM input signal to solenoid coil 90 via conductor 98 to shift input member 74 leftwardly, viewing Figure 1. Such leftward shift of input member 74 causes valve member 70 to be unseated from valve member 60 at seat 72 and venting of chamber 130 to ambient via passage 68 and vent port 58. Consequently, a force (torque) imbalance is effected upon shaft 138 via pistons 112, 114 to pivot fin 16 clockwise. The clockwise angular acceleration of fin 16 is a function of physical factors including the effective torque imbalance, inertia of the moved parts, external loading, and friction. Pivotal velocity attained by fin 16 is a time integral of angular acceleration.

Further, it must be recalled that pivotal acceleration of the fin member 16 is approximately proportionate to the fluid pressure imbalance on the pistons 112, 114, and is, therefore, also approximately proportionate to the difference between the balancing pressure which existed in chamber 130 before receipt of the input signal and the lessened pressure in chamber 130 resulting from the partial venting of fluid pressure therefrom. In other words, the pivotal acceleration effected at fin 16 in response to an input signal is a function of the recent pressure change history of the servo system. Recalling the principles of operation of servo valve apparatus 46, it will be remembered that the pressure imbalance effective on input member 74 and resisting the input signal is also a function of the recent pressure change history of the servo valve apparatus. It follows, that the dynamic pressure imbalance effective within servo valve apparatus 46 is analogous to a negative second order (acceleration) feedback within the servo system 10.

In overview once again, the servo system 10 includes a direct feedback of fin position via transducer 142 and conductor 144. Further, servo valve apparatus 46 provides an added feedback which is analogous to a second order time derivative of fin position (fin angular acceleration). Those skilled in the art to which the present invention pertains will recognize that increasing the number of feedback channels within such a servo system offers many advantages including improving the stability, frequency response and transient response of the servo system.

Figures 5, 6 and 7 depict alternative embodiments of the servo valve apparatus of the invention wherein features which are similar in structure or analogous in function to those described above are referenced with the same numeral used above, and increased by 200, 400, and 600, respectively.

Figure 5 illustrates a servo valve apparatus 246, having a housing 250. A portion of the housing 250 is received within a bore 150 of a base member 152, and sealingly cooperates therewith to bound fluid flow paths 154, 156 communicating with valve apparatus 246. Comparison of the structure of valve 246 with that depicted schematically by Figure 2 will reveal many similarities. For example, valve apparatus 246 includes a movable input member 274 defining a valve portion 270 at the lower end thereof. The valve portion 270 cooperates with a seat 272 defined on the upper end of a valve member 260 and circumscribing a through passage 268. Similarly to the input member 74' of Figure 2, the input member 274 defines a through passage 284 having a flow restricting orifice 286 defined therein. The input member 274 also defines a piston portion 278 which sealingly cooperates with the housing 250 to bound a feedback chamber 280. The passage 284 opens from outlet port 256 to chamber 280.

In contrast to the servo valve apparatus of Figure 2, the apparatus 246 of Figure 5 includes a pair of solenoid coils, 290, 292 disposed on opposite sides of a pole piece 294. The pole piece 294 radially aligns with an annular armature collar 296 carried by the input member 274. The above will be recognized as similar to the servo valve apparatus of Figures 1 and 3. However, in further contrast, the valve apparatus 246 includes an annular resilient member 158 which at its inner diameter engages input member 274 and at its outer diameter engages the housing 250. The member 158 is functionally similar to spring 66 of Figures 1—3. However, member 158 by its annular configuration also performs a guiding function for the input member 274. That is, as the input member 274 moves upwardly or downwardly from the illustrated position, the member 158 resiliently deflects to perform its springing function, and also assists in holding the input member 274 centered within the housing 250 without imposing any sliding friction on the input member. This feature of the valve apparatus 246 is of significance because by reducing friction within the servo valve, the hysteresis of the valve and of the servo system are both reduced. In view of the explanation above of the analog operation of the valve of Figure 2 and of PDM operation of the valve of Figures 1 and 3, no further explanation of the operation of valve apparatus 247 is deemed necessary.

Figures 6 and 7 depict alternative embodiments of the invention which are very similar in structure, but which differ from each other in the way in which the input member of the valve is moved in response to input signals. The embodiments of both Figures 6 and 7 differ from those embodiments of Figures 1 and 3 described above in that the previous embodiments incorporated an electrical-to-force transducer for moving the valve input member. In contrast, the embodiments of Figures 6 and 7 incorporate a portion of a structure which pneumatically effects a force amplification between a very low-power electrical-to-force transducer and the input member of the servo valve.

In further explanation of the above, consideration of Figure 6 will reveal that the servo valve apparatus 446 there depicted is in many ways similar to that of Figure 5. However, the input member 474 includes a radially extending partition member 160 separating chambers 162, 164 defined within housing 450. The partition member 160 sealingly cooperates with housing 450 via a diaphram 166 therebetween. A coil spring 168 disposed within chamber 164 resiliently biases input member 474 upwardly to a position wherein outlet port 456 is communicated to vent port 458.

In order to effect controlled movement of the input member 474, a conduit 170 connects chamber 162 with an outlet port 172 of a fluidic amplifier 174. The amplifier 174 includes a power nozzle 176 directing a fluid power jet (arrow 178) toward outlet port 172. Interposed between nozzle 176 and port 172 is a transversely movable jet deflection pin 180. The pin 180 is movable transversely to jet 178 as illustrated by double ended arrow 182. Transverse movement of pin 180 selectively deflects all or a portion of power jet 178 into vent passages 184. The pin 180 is selectively movable transversely by a low-power electrical-to-force transducer 186, which preferably takes the form of a galvanometer movement.

In view of the above, it will easily be seen that a particular selected position of pin 180 will result in a determined pressure at outlet port 172 (and in chamber 162) which pressure is sufficient to counterbalance spring 168 to hold input member 474 in a closed-center position. In such a closed-center position, the valve portion 470 of input member 474 engages seat 472 and valve member 460 engages step 464. Thus communication from inlet port 448 to outlet port 456, and from outlet port 456 to vent port 458, is closed. Movement of pin 180 effecting a sufficient increase of pressure in chamber 162 above the determined pressure moves input member 474 and valve member 460 to open fluid flow from inlet port 448 to outlet port 456. Similarly, movement of pin 180 effecting a sufficient decrease of pressure in chamber 162 below the determined pressure allows spring 168 to move input member 474 to open outlet port 456 to vent port 458. Thus, the embodiment of Figure 6 employs push-only analog operation, and is similar in operation to that described above with reference to Figure 2.

Figure 7 depicts a servo valve apparatus 646 very similar to apparatus 446 of Figure 6. In order to obtain reference numerals for use in describing the structure depicted by Figure 7, features analogous to those described for the first time immediately above with reference to Figure 6 are referenced with the same numeral having a prime added. However, the input member 674 of the apparatus 646 is not spring loaded in either direction, but rather, is adapted for push-pull analog operation. Such push-pull analog operation is effected by passages 188, 190 which respectively connect opposite chambers 162' and 164' to respective outlet ports 192, 194 of a fluidic amplifier 174'. The amplifier 174' includes a nozzle 176' directing a power jet 178' toward a splitter 196. The splitter 196 separates respective receiver cavities 198, 200 communicating with outlet ports 192, 194. Similarly to the amplifier 174, the amplifier 174' is associated with a gavanometer analog electrical-to-force transducer 186'. The transducer 186' moves a pin 180' transversely (arrow 182') to power jet 178' to deflect the latter. Dependent upon the position of pin 180', the jet 178' may be deflected so as to be received entirely into receiver 198, or entirely into receiver 200, or may be split substantially equally therebetween.

Consequent to the above, when the pin 180' occupies a particular selected position, the jet 178' is split to maintain respective fluid pressures within chambers 162', 164' to hold input member 674 in a closed-center position. Transverse movement of pin 180' effecting an increase in pressure within chamber 162' will also effect a decrease of pressure within chamber 164', and a downward movement of input member 674 and valve member 660 to open inlet port 648 to outlet port 656. Conversely, opposite transverse movement of pin 180' will effect an increase of pressure in chamber 164' and a decrease of pressure in chamber 162'. Thus, input member 674 is moved upwardly to vent outlet port 656 to port 658.

Figure 8 schematically depicts an embodiment of a servo valve apparatus according to the present invention, which valve is adapted for operation with incompressible fluid. As above, features of the embodiment depicted in Figure 8 which are analogous to those described in connection with Figures 1 or 3, are referenced with the same numeral used above and increased by 800. The servo valve apparatus 846 depicted by Figure 8 includes a housing 850 which movably receives a pair of coaxial valve members 860, 870. The valve member 860 includes a valving portion 862 which sealingly engages the housing 850 at a step 864 thereon to close communication between an inlet port 848 and an outlet port 856.

A coil spring 866 urges valve member 860 toward sealing engagement with the step 864. The other valve member 870 is elongate and is sealingly cooperable with the valve member 860 at a seat 872 thereon. The valve member 870 includes an input portion 874 sealingly extending externally of housing 850 through a portion of a stepped bore 854 defined thereby. A coil spring 882 urges valve member 870 toward sealing engagement with seat 872 so as to close communication between outlet port 856 and vent port 858. It will be noted that valve member 860 defines a cross passage 1000 providing fluid communication between passage 868 and vent port 858. Further, the valve member 870 includes an enlarged diameter piston portion 878 which is substantially coplanar at its left end 1002 with the corresponding end 1004 of valve member 860, viewing Figure 8. The referenced ends 1002, 1004 of both valve members 860, 870 communicate with a chamber 880 via a flexible sealing diaphram 1006 which overlies the ends of both valve members. Chamber 880 communicates with outlet port 856 via a passage 884 having a restrictive orifice 886 therein.

The ends 1002, 1004 have equal areas where they seal against the diaphragm 1006.

Apart from the structural differences between valve apparatus 846 and those valve structures described above, which will be apparent in view of Fighure 8 and the foregoing, the valve apparatus 846 includes a resilient bellows member 1008. The bellows member 1008 communicates at one side with chamber 880 and at its other side communicates with ambient pressure. Thus, it will be seen that chamber 880 is of resilient variable volume as bellows member 1008 expands and contracts in response to fluid pressure therein. That is, chamber 880 is fluid volume absorptive because of bellows member 1008.

During operation of valve apparatus 846, incompressible pressure fluid is communicated from inlet port 848 to outlet port 856 and from outlet port 856 to vent port 858 in response to respective leftward and rightward input movements of portion 874 effected by input force applied thereto. Thus, pressure fluid flows to and from chamber 880 via passage 884 and orifice 886. Because such fluid flow is inconpressible, only a very small flow would be sufficient to match the pressure in chamber 880 to the pressure at outlet port 856 were it not for bellows member 1008. In view of the resiliency of bellows member 1008 and the volume variation possible for chamber 880 as the former expands and contracts with fluid pressure changes therein, such pressure changes are delayed to follow pressure changes at outlet port 856 substantially as a first time derivative thereof. Consequently, the valve members 860, 870 are each subject to a respective rightwardly directed feedback pressure force which is transmitted thereto via diaphram 1006.

Figure 9 depicts a cross sectional view of an alternative embodiment of the inventive servo valve apparatus which, as reduced to practice, is of PDM solenoid operated type like that depicted schematically by Figures 1 and 3. However, Figure 9 also depicts several salient features which are of great importance when an actual implementation of the present servo valve apparatus is attempted. In order to preserve space upon Figure 9 and because of similarities, the series of reference numerals of Figures 1 and 3 and having a triple prime added is used for analogous features of Figure 9, which by now should be familiar to the reader.

Figure 9 depicts a servo valve 46''' which is secured to a motor housing 44''' (only a portion of which is illustrated). The servo valve apparatus 46''' includes a housing 52''' movably receiving valve members 60''', 70''', and an input member 74'''. A coil spring 66''' coacts with the valve member 60''' to urge the latter into sealing engagement with an annular valve seat 64''' to close fluid communication between an inlet port 48''' and an outlet port 56'''. The housing 44''' defines respective passages 11 and 13 communicating individually with ports 48''' and 56'''. Similarly to the embodiment depicted by Figure 5, valve 46''' includes an annular resilient spring member 15. The spring member 15 is threadably coupled with an elongate portion 74a of input member 74''', which portion also defines armature collar 96'''. Accordingly, the armature collar 96''' may be axially adjusted relative spring member 15 to be radially aligned with pole piece 94 while the spring member 15 is sufficiently deflected to exert a desired predetermined closing preload on valve member 70''' via the input member 74'''. The valve member 60''' is in the form of a tube.

Further, in order to compensate for tolerance stack up within individual serially manufactured valves, the input member 74''' comprises an elongate central portion 74b which at its lower end extends into contacting relationship with the valve member 70''' and which at its upper end defines feedback piston portion 78'''. The portion 74b is threadably coupled with portion 74a so that a sealing relationship of valve member 60''' with seat 64''' may be achieved simultaneously with valve member 70''' sealingly engaging seat 72'''.

An additional important feature of valve 46''' is an axially extending spider member 17 which is disposed in surrounding relationship with both the valve member 70''' and with a lower end portion of member 74b. The spider member 17 is immovably captured within the housing 52 and defines a multitude of spaced apart axially extending legs 19 (only two of which are visible on Figure 9) movably receiving the valve member 70''' for axial relative movement. Spider member 17 also defines a plurality of spaced apart radially extending fingers 21 (only two of which are visible) movably and guidingly receiving the portion 74b of input member 74'''. The spider member 17 contributes to coaxial alignment of valve members 60''', and 70''', as well as of input member 74'''. Further, it will be appreciated that input member 74''' is rapidly movable and is particularly adapted for PDM operation because frictional engagement therewith occurs only at the piston portion 78''', and to a lesser extent at spider member 17.

Further, it will be appreciated that the valve member 60''' defines a certain sealing diameter with the valve seat 64'''. The valve member 60''' also defines a determined sealing diameter with the valve member 70''', which is substantially the same as the certain diameter defined with valve seat 64'''. In order to achieve static pressure balancing of the valve apparatus 46''', the input member portion 78''' also defines a feedback diameter exposed to chamber 80''' which is substantially equal to both the certain and determined diameters at valve member 60'''. In order for valve member 60''' to define equal sealing diameters with valve member 70''' and with seal member 64''', the valve member 60''' defines a seat-defining portion 23 opposite the head end 62''' which is radially enlarged relative to the remainder of the valve member. Portion 23 defines seat 72'''. Inspection of Figure 9 will reveal that both the head end portion 62''' and seat-defining portion 23 of valve member 60''' are larger in outer diameter than a seat-defining bore portion 25 of seat member 64'''. As a result, the valve member 60''' and seat member 64''' are captively retained permanently together while allowing for relative valving movement therebetween. Further, it will be noted that valve member 60''' defines a radially and axially extending skirt portion 27 which is L-shaped in cross section. The skirt portion 27 defines an annular spring receiving seat on valve member 60''' for coil spring 66'''.

## Claims

1. Servo valve apparatus comprising valve means (70) movable to open and close fluid communication between an inlet port (48) an output port (56) and a vent port (58); the valve means (70) comprising a pair of relatively movable valve members (60, 70), the first (60) of which closes communication between the inlet and outlet ports in a first position but opens such communication in a second position; and the second (70) of which closes communication between the outlet port and the vent port in a first position but opens such communication in a second position; and input means (74) for moving either valve member into its second position; characterised by feedback means (78, 84, 86, 80) opposing movement of said valve member substantially as a first time derivative of fluid pressure at the outlet port and further characterised by output means (102) for moving an output member (16) and comprising a first movable pressure-responsive surface (112) continuously communicating with pressure fluid at said inlet port (48), whereby a first force due to the inlet pressure is acting on said output member in a first direction of movement, and a second movable pressure-responsive surface (114) communicating with pressure fluid at said outlet port (56), whereby a second force due to the outlet pressure, exceeding said first force, is acting on said output member in a second direction opposite said first direction.

2. Apparatus as claimed in Claim 1 in which the acceleration of the output member (16) is proportional to the difference between the pressure differential betweeen the two surfaces when in equilibrium and the actual effective pressure differential.

3. Apparatus as claimed in Claim 1 or Claim 2 wherein a valve member (60) is sealingly co-operable with means (64) defining a seating surface, said valve member defining passage means (68) communicating said outlet port (56) with the vent port (58) and opening in another seating surface (72), the second valve means (70) in its first relative position sealing with the seating surface (72).

4. Apparatus as claimed in any preceding claim wherein the input means comprises a pressure-responsive member (78), pressure fluid absorptive volume (80) means communicating with said pressure-responsive member, passage means (68) communicating said outlet port (56) with said pressure fluid absorptive volume means (80), and flow restriction means (86) interposed between said outlet port (56) and said pressure fluid absorptive volume means (80).

5. Apparatus as claimed in Claim 4 in which the pressure-responsive member defines a variable-volume chamber (80) including a bellows, variation of the volume of which absorbs and releases pressure fluid volume.

6. Apparatus as claimed in any preceding claim in which the input means (74) comprises a rapidly movable member operatively associated with solenoid and control means for generating an electrical input to said solenoid as a train of square-wave voltage pulses having a duty cycle variable in accord with a desired fluid communication by said valve apparatus, the control means being operatively connected with the solenoid such that said generated voltage pulses are applied to an electromagnetic winding thereof to move said armature.

7. Apparatus as claimed in any of Claims 1 to 5 in which the input means (74) comprises a fluid pressure-responsive member effective to move one valve member toward its second position, and resilient means for urging the other valve member toward its second position.

8. Apparatus as claimed in any of Claims 1 to 5 in which the input means (74) comprises means for creating a jet of fluid, means for receiving said jet of fluid and transmitting said received jet as fluid pressure to a pressure-responsive member and means for selectively deflecting said jet of fluid relative said receiving means in response to an electrical input so as to controllably increase and decrease said fluid pressure.

9. Apparatus as claimed in any preceding claim in which when a valve member (60, 70) is closed on its seat (64, 72) the fluid forces on the valve member are substantially balanced whereby the valve has high static gain.

10. Apparatus as claimed in Claim 9 in which when the valve member is open the dynamic gain of the valve decreases with increasing rate of an input signal for moving the valve member.

11. Apparatus as claimed in any preceding claim including means for integrating over time the value of fluid pressure at the outlet port (56) and integrating memory means for storing the result of integration for use as a feedback signal in the feedback means.

**Patentansprüche**

1. Servoventileinrichtung mit einer Ventilvorrichtung (70), die so verschiebbar ist, daß sie die Strömungsmittelverbindung zwischen einer Einlaßöffnung (48), einer Auslaßöffnung (56) und einer Belüftungsöffnung (58) öffnet und schließt, und die ein Paar von relativ zueinander beweglichen Ventilbauteilen (60, 70) aufweist, deren erstes (60) die Verbindung zwischen den Einlaß- und Auslaßöffnungen in einer ersten Position schließt, eine solche Verbindung jedoch in einer zweiten Position öffnet, und deren zweites (70) eine Verbindung zwischen der Auslaßöffnung und der Belüftungsöffnung in einer ersten Positioni schließt, eine solche Verbindung jedoch in einer zweiten Position öffnet, und mit einer Eingabevorrichtung (74) zum Verschieben jeweils eines der Ventilbauteile in die zweite Position, gekennzeichnet durch eine Rückkopplungsvorrichtung (78, 84, 86, 80), die der Bewegung des Ventilbauteiles als eineerste Ableitung der Zeit des Strömungsmitteldruckes an der Auslaßöffnung entgegenwirkt, und ferner gekennzeichnet durch eine ein Abgabebauteil (16) verschiebende Abgabevorrichtungmit einer ersten beweglichen, auf Druck ansprechenden Oberfläche (112), die laufend mit demn Druckströmungsmittel an der Einlaßöffnung (48) in Verbindunng steht, wobei eine erste Kraft aufgrund des Einlaßdruckes auf das Abgabebauteil in einer ersten Bewegungsrichtung wirkt, sowie einer zweiten beweglichen, auf Druck ansprechenden Oberfläche (114), die mit dem Druckströmungsmittel an der Auslaßöffnung (56) in Verbindung steht, wobei eine zweite Kraft aufgrund des Auslaßdruckes, die höher ist als die erste Kraft, auf das Ausgangsbauteil in einer zweiten Richtung entgegengesetzt zur ersten Richtung wirkt.

2. Einrichtung nach Anspruch 1, bei der die Beschleunigung des Abgabebauteiles (16) proportional der Differenz des Druckunterschiedes zwischen den beiden Oberflächen im Gleichgewichtszustand und dem tatsächlichen effektiven Druckunterschied ist.

3. Einrichtung nach Anspruch 1 oder 2, bei der ein Ventilbauteil (60) abdichtend mit einer eine Sitzfläche ausbildenden Vorrichtung (64) zusammenwirkt, das Ventilbauteil einen Durchgang (68) festlegt, der die Auslaßöffnung (56) mit der Ventilöffnung (58) verbindet und in eine andere Sitzfläche (72) mündet, und die zweite Ventilvorrichtung (70) in ihrer ersten relativen Position mit der Sitzfläche (72) abdichtet.

4. Einrichtung nach einem der vorausgehenden Ansprüche, bei der die Eingabevorrichtung ein auf Druck ansprechendes Bauteil (78), eine ein Druckmittel absorbierendes Volumen aufnehmende Vorrichtung (80), die mit dem auf Druck ansprechenden Bauteil in Verbindung steht, eine Durchlaßvorrichtung (68), die die Auslaßöffnung (56) mit der Vorrichtung (80) verbindet, und eine den Durchfluß begrenzende Vorrichtung (86), die zwischen die Auslaßöffnung (56) und die Vorrichtung (80) gesetzt ist, aufweist.

5. Einrichtung nach Anspruch 4, bei der das auf Druck ansprechende Bauteil eine Kammer (80) mit variablem Volumen festlegt, welche einen Balgen aufweist, dessen Volumenänderung das Druckmittelvolumen absorbiert und freigibt.

6. Einrichtung nach einem der vorausgehenden Ansprüche, bei der die Eingabevorrichtung (74) ein sich rasch bewegendes Bauteil aufweist, das antriebsmäßig dem Solenoid und der Steuervorrichtung zur Erzeugung einer elektrischen Eingabe in das Solenoid in Form einer Folge von Rechteckwellen-Spannungsimpulsen zugeordnet ist, die eine in Übereinstimmung ·mit einer gewünschten Strömungsmittelverbindung durch die Ventileinrichtung veränderbare Taktdauer haben, wobei die Steuervorrichtung antriebsmäßig mit dem Solenoid so verbunden ist, daß die erzeugten Spannungsimpulse einer elektromagnetischen Wicklung des Solenoids zur Verschiebung des Ankers aufgegeben werden.

7. Einrichtung nach einem der Ansprüche 1—5, bei der die Eingabevorrichtung (74) ein auf Strömungsmitteldruck ansprechendes Bauteil, das eine Verschiebung eines Ventilbauteiles in seine zweite Position bewiukt, sowie eine nachgiebige Vorrichtung, die das andere Ventilbauteil in die zweite Position drückt, aufweist.

8. Einrichtung nach einem der Ansprüche 1—5, bei der die Eingabevorrichtung (74) eine Vorrichtung zur Erzeugung eines Strömungsmittelstrahles, eine Vorrichtung zur Aufnahme des Strömungsmittelstrahles und zur Übertragung des aufgenommenen Strahles als Strömungsmitteldruck in ein auf Druck ansprechendes Bauteil, und eine Vorrichtung zum selektiven Ablenken des Strömungsmittelstrahles relativ zu der Aufnahmevorrichtung in Abhängigkeit von einer elektrischen Eingabe in der Weise, daß der Strömungsmitteldruck in steuerbarer Weise erhöht und erniedrigt wird, aufweist.

9. Einrichtung nach einem der vorausgehenden Ansprüche, bei der dann, wenn ein Ventilbauteil (60, 70) auf seinem Ventilsitz (64, 72) geschlossen ist, die Strömungsmittelkräfte auf das Ventilbauteil im wesentlichen abgeglichen sind, wobei das Ventil eine hohe statische Verstärkung hat.

10. Einrichtung nach Anspruch 9, bei der dann, wenn das Ventilbauteil geöffnet ist, die dynamische Verstärkung des Ventils mit zunehmender Geschwindigkeit eines Eingangssignals zur Verschiebung des Ventilbauteiles abnimmt.

11. Einrichtung nach einem der vorausgehenden Ansprüche, mit einer Vorrichtung zum Integrieren des Wertes des Strömungsmitteldruckes an der Auslaßöffnung (56) über die Zeit, und einer integrierenden Speichervorrichtung zur Speicherung des Resultats der Integrierung für die Verwendung als Rückkopplungssignal in der Rückkopplungsvorrichtung.

**Revendications**

1. Dispositif de servovanne qui comprend des moyens d'obturation (70) mobiles pour ouvrir et fermer la communication de fluide entre un orifice d'entrée (48), un orifice de sortie (56) et un orifice d'évent (58); les moyens d'obturation (70) comprenant deux éléments d'obturation (60, 70) mobiles l'un par rapport à l'autre, dont le premier (60) ferme la communication entre les orifices d'entrée et de sortie dans une première position mais ouvre cette communication dans une deuxième position; et dont le deuxième (70) ferme la communication entre l'orifice de sortie et l'orifice de purge dans une première position mais ouvre cette communication dans une deuxième position; et des moyens d'entrée (74) pour déplacer l'un quelconque des éléments d'obturation à sa deuxième position; caractérisé par des moyens de réaction (78, 84, 86, 80) qui s'opposent au mouvement dudit élément d'obturation sensiblement comme une dérivée première, en fonction du temps, de la pression de fluide à l'orifice de sortie, et caractérisé en outre par des moyens de sortie (102), pour déplacer un organe de sortie (16), qui comportent une première surface mobile (112) sensible à la pression en communication continue avec le fluide sous pression audit orifice d'entrée (48), de sorte qu'une première force due à la pression d'entrée agit sur ledit organe de sortie dans un premier sens de déplacement, et une deuxième surface mobile (114) sensible à la pression et en communication avec le fluide sous pression audit orifice de sortie (56), de sorte qu'une deuxième force due à la pression de sortie, supérieure à ladite première force, agit sur ledit organe de sortie dans un deuxième sens de déplacement opposé audit premier sens.

2. Dispositif suivant la revendication 1, dans lequel l'accélération de l'organe de sortie (16) est proportionnelle à la différence entre la pression différentielle entre les deux surfaces, lorsqu'elles sont en équilibre, et la pression différentielle effective.

3. Dispositif suivant la revendication 1 ou la revendication 2, dans lequel un élément d'obturation (60) coopère de façon étanche avec des moyens (64) définissant une surface de siège, ledit élément d'obturation définissant des moyens de passage (68) qui font communiquer l'orifice de sortie (56) avec l'orifice de purge (58) et débouchent dans une autre surface de siège (72), le deuxième élément d'obturation (70) dans sa première position relative étant en contact étanche avec la surface de siège (72).

4. Dispositif suivant l'une quelconque des revendications précédentes, dans lequel les moyens d'entrée comprennent un élément sensible à la pression (78), des moyens (80) définissant un volume d'absorption de fluide sous pression en communication avec ledit élément sensible à la pression, des moyens de passage (68) qui font communiquer ledit orifice de sortie (56) avec lesdits moyens (80) de volume d'absorption de fluide sous pression, et des moyens de limitation d'écoulement (86) interposés entre ledit orifice de sortie (56) et lesdits moyens (80) de volume d'absorption de fluide sous pression.

5. Dispositif suivant la revendication 4, dans lequel l'élément sensible à la pression définit une chambre de volume variable (80) comprenant un soufflet dont la variation de volume absorbe et libère un volume de fluide sous pression.

6. Dispositif suivant l'une quelconque des revendications précédentes, dans lequel les moyens d'entrée (74) comprennent un élément déplaçable rapidement, fonctionnellement associé à un solénoïde, et des moyens de commande pour engendrer un signal d'entrée électrique pour ledit solénoïde sous la forme d'un train d'impulsions de tension à onde carrée ayant un cycle de travail variable conformément à une communication de fluide désirée pour ledit dispositif de vanne, les moyens de commande étant fonctionnellement reliés au solénoïde de sorte que lesdites impulsions de tension générées sont appliquées à un enroulement électromagnétique du solénoïde pour déplacer ladite armature.

7. Dispositif suivant l'une quelconque des revendications 1 à 5, dans lequel les moyens d'entrée (74) comprennent un élément sensible à la pression de fluide, qui agit pour déplacer un élément d'obturation vers sa deuxième position, et des moyens élastiques pour rappeler l'autre élément d'obturation vers sa deuxième position.

8. Dispositif suivant l'une quelconque des revendications 1 à 5, dans lequel les moyens d'entrée (74) comprennent des moyens pour créer un jet de fluide, des moyens pour recevoir ledit jet de fluide et transmettre ledit jet reçu comme pression de fluide à un élément sensible à la pression, et des moyens pour dévier sélectivement ledit jet de fluide par rapport auxdits moyens de réception en réponse à une entrée électrique, de façon à augmenter et diminuer d'une manière réglée ladite pression de fluide.

9. Dispositif suivant l'une quelconque des revendications précédentes, dans lequel, lorsqu'un élément d'obturation (60, 70) est fermé sur son siège (64, 72), les forces du fluide sur l'élément d'obturation sont sensiblement équilibrées, de sorte que la vanne possède un gain statique élevé.

10. Dispositif suivant la revendication 9, dans lequel, lorsque l'élément d'obturation est ouvert, le gain dynamique de la vanne diminue pour une fréquence croissance d'un signal d'entrée pour déplacer l'élément d'obturation.

11. Dispositif suivant l'une quelconque des revendications précédentes, comprenant des moyens pour intégrer, en fonction du temps, la valeur de la pression de fluide à l'orifice de sortie (56), et des moyens de mémoire d'intégration pour stocker le résultat de l'intégration afin de l'utiliser comme signal de réaction dans les moyens de réaction.

FIG 1

FIG. 2

FIG 3

FIG 4

FIG 5

FIG 6

FIG 7

FIG 8

FIG 9